# EUROPÄISCHE PATENTSCHRIFT

(11) **EP 2 368 725 B1**
(45) Veröffentlichungstag und Bekanntmachung des Hinweises auf die Patenterteilung: **14.11.2012**
(21) Anmeldenummer: 11151477.4
(22) Anmeldetag: 20.01.2011
(51) Int. Cl.: B60C 13/02

(54) **Fahrzeugluftreifen**
Pneumatic tyre for a vehicle
Pneu de véhicule

(30) Priorität: 08.03.2010 DE 102010015845
(43) Veröffentlichungstag der Anmeldung: 28.09.2011
(73) Patentinhaber: Continental Reifen Deutschland GmbH, 30165 Hannover (DE)
(72) Erfinder: Behr, Ulrich, 30169, Hannover (DE); Gerhardt, Joachim, 30890, Barsinghausen (DE); Rittweger, Stefan, 30163, Hannover (DE); Buchinger-Barnstorf, Thomas, 30974, Wennigsen (DE)
(74) Vertreter: Finger, Karsten

(56) Entgegenhaltungen:
- WO-A1-2009/084634
- JP-A- 2001 150 910
- US-A- 2 874 746
- US-A- 4 809 757
- US-A- 5 385 192
- US-A- 5 882 450

## Beschreibung

Die Erfindung betrifft einen Fahrzeugluftreifen, insbesondere Van-Reifen, mit einem Laufstreifen, Schulterbereichen und Seitenwänden, wobei - im Reifenquerschnitt betrachtet - eine der Seitenwände im Bereich des Äquators des Fahrzeugluftreifens ein die Seitenwand gegen Scheuerkontakte schützendes, über die Seitenwand umlaufendes Schutzelement aufweist, wobei -im Reifenquerschnitt betrachtet - die Seitenwand aus einem oberen Seitenwandbereich und einem unteren Seitenwandbereich besteht, wobei die äußere Kontur des Schulterbereiches und des oberen Seitenwandbereiches ausschließlich krümmungsstetig konvex ausgebildet ist, wobei das Schutzelement in die Kontur des oberen Seitenwandbereiches integriert ist und wobei der untere Seitenwandbereich durch eine nach axial innen einspringende Stufe gegenüber der Kontur des oberen Seitenwandbereiches nach axial innen versetzt angeordnet ist und eine ebenfalls ausschließlich krümmungsstetig konvex ausgebildete Kontur aufweist.

Ein derartiger Fahrzeugluftreifen ist aus der JP 2001-150910 A und aus der US 5 882450A bekannt. Das Schutzelement ist üblicherweise eine auf die Seitenwand aufgesetzte, über diese umlaufende und fest mit dieser verbundene Gummirippe. Das Schutzelement steht aus der Seitenwandkontur nach axial außen hervor und ist derart dimensioniert, dass Scheuerkontakte und dadurch hervorrufbare Verletzungen des Reifens abgefangen und verhindert werden können.

Bei Van-Reifen ist diese umlaufende, auf die Seitenwand aufgesetzte Gummirippe im Bereich des sogenannten "Äquators" angeordnet. Der Äquator des Reifens ist die in axialer Richtung betrachtet breiteste Stelle des Reifens.

Durch dieses auf die Seitenwand aufgesetzte Schutzelement sind Probleme bei der Einformung des noch unvulkanisierten Reifens in die Vulkanisierform, beispielsweise in Form von unerwünschten Lufteinschlüssen vermieden. Zudem ist der Luftwiderstand während des Fahrbetriebes des Fahrzeugluftreifens positiv beeinflusst.

Nachteilig jedoch ist, dass die Steifheit des Fahrzeugluftreifens im Bereich der Stufe gering ist.

Es ist daher die Aufgabe der Erfindung, einen Fahrzeugluftreifen, insbesondere einen Van-Reifen mit einem Schutzelement im Äquatorbereich des Reifens zur Verfügung zu stellen, der während der Vulkanisation in seiner Einformbarkeit und der während seine Fahrbetriebes aerodynamisch verbessert ist und der zudem im Bereich der Stufe versteift ist.

Die Aufgabe wird gelöst, indem die Stufe treppenartig aus wenigstens einer weiteren Halbstufe gebildet ist, wobei die Halbstufe radial innen an die Stufe und an den unteren Seitenwandbereich angrenzend angeordnet ist und welche eine geringere axiale Breite als die Stufe aufweist.

Der erfindungsgemäße Fahrzeugluftreifen zeichnet sich dadurch aus, dass das Schutzelement im oberen Seitenwandbereich in diese Seitenwandkontur integriert ist und dort nicht aus der krümmungsstetigen äußeren Kontur der oberen Seitenwand hervorsteht, also nicht auf die Seitenwand aufgesetzt ist. Ebenso sind die Krümmungen der konvexen Konturen des Schulterbereiches und des oberen Seitenwandbereiches einander angepasst, so dass beide Konturen, die Kontur des Schulterbereiches und die Kontur des oberen Seitenwandbereiches konvex und miteinander fluchtend ohne Kontursprung aerodynamisch günstig sowie für das Einformen des Reifenrohlings während des Vulkanisiervorganges vorteilhaft ausgebildet ist. Die Aerodynamik des Fahrzeugluftreifens während des Fahrbetriebes als auch die Einformung während des Vulkanisiervorganges sind verbessert.

Durch die treppenartige Anordnung ist die Seitenwand im Bereich der Stufe vorteilhaft versteift.

Vorteilhafterweise weist die Halbstufe eine radiale Höhe von 3mm bis 10mm, vorteilhafterweise von 5mm und etwa die halbe axiale Breite der Stufe auf.

Vorteilhaft ist es, wenn der Fahrzeugluftreifen mit einer segmentierten Vulkanisierform heizgepresst ist, so dass der Laufstreifen und der Schulterbereich durch radial verfahrbare Formsegmente und jede Seitenwand durch eine an die radial verfahrbaren Formsegmente angrenzende Seitenwandschale geformt ist, so dass der mit dieser Vulkanisierform vulkanisierte Fahrzeugluftreifen im Bereich der Grenzfläche von radial verfahrbaren Formsegmenten zur Seitenwandschale eine (sogenannte) Splitlinie aufweist und wenn der obere Seitenwandbereich (beginnend von dieser Splitlinie) zwischen 50% und 70%, vorzugsweise etwa 60% und der untere Seitenwandbereich zwischen 50% und 30%, vorzugsweise etwa 40% der radialen Höhe der durch die Seitenwandschale geformten Reifenseitenwand einnimmt. Es ist durch das zusätzliche Angebot an Gummimaterial sichergestellt, dass der Reifen vor Beschädigungen durch Scheuerkontakten geschützt ist und somit in seiner Lebensdauer erhöht ist. Im Bereich der Splitlinie kann eine kleine, rein formenbedingte Ausnehmung angeordnet sein, die jedoch aus der Beschreibung der erfindungsgemäßen Kontur ausgenommen sein soll.

Vorteilhafterweise weist die Halbstufe über den Umfang des Reifens Durchbrechungen auf, wobei vorzugsweise drei Halbstufen und drei Durchbrechungen angeordnet sind, wobei eine Halbstufe mit einer Durchbrechung regelmäßig mit gleichen Umfangslängen abwechselt. Durch die Durchbrechungen ist die Fläche für mögliche Kennzeichnungen des Reifens vergrößert.

Das aerodynamische Verhalten des Fahrzeugluftreifens ist weiterhin verbessert, wenn auf der Seitenwand nur vertiefte, in die Reifenseitenwand eingebrachte Kennzeichnungen angeordnet sind. Bisher auf Seitenwänden angeordnete erhabene, aerodynamisch ungünstige Kennzeichnungen sind vermieden.

Die Splitlinie bezeichnet am Fahrzeugluftreifen -im Reifenquerschnitt betrachtet- die radial verlaufende, gedachte Linie, an der das den Laufstreifen formende Formsegment der Vulkanisierform an die die Seitenwand formende Seitenwandschale der Vulkanisierform angrenzt.

Weitere Merkmale, Vorteile und Einzelheiten der Erfindung werden anhand der Zeichnungen, die schematische Ausführungsbeispiele darstellen, näher erläutert.

Es zeigen die:
Fig.1 einen Querschnitt durch die äußere Kontur eines hälftigen Fahrzeugluftreifens;
Fig.2 eine Vergrößerung eines Ausschnitts der Schulterkontur und der Seitenwandkontur der Fig.1;
Fig.3 eine weitere Vergrößerung eines Ausschnitts der Schulterkontur und der Seitenwandkontur mit treppenartig ausgestalteter Stufe.

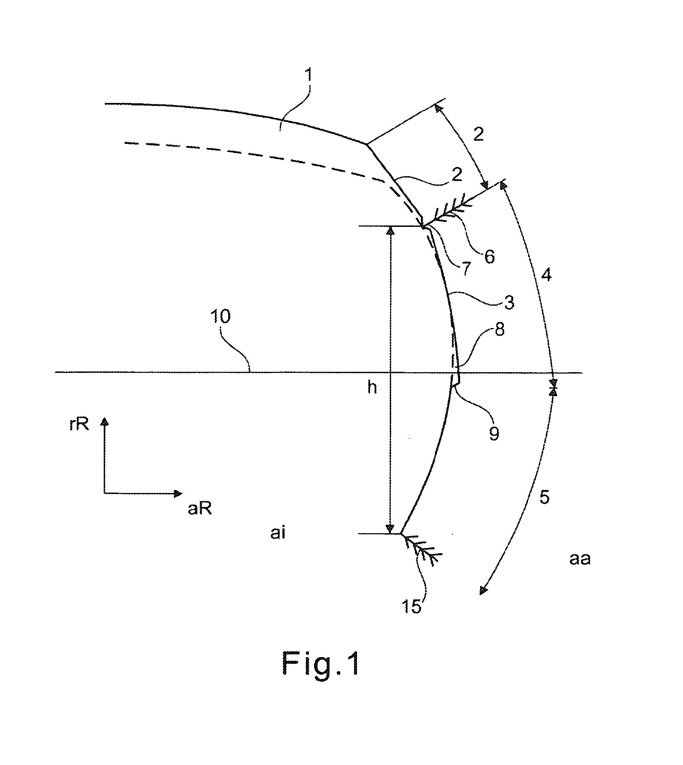

Die **Fig.1** zeigt einen Querschnitt durch die äußere Kontur eines hälftigen Fahrzeugluftreifens. Die äußere Kontur ist mit der durchgezogenen Linie dargestellt. Der Fahrzeugluftreifen ist ein Van-Reifen und weist einen Laufstreifen 1, eine Reifenschulter 2 und eine Seitenwand 3 auf. Die Seitenwand 3 besteht aus einem oberen Seitenwandbereich 4 und einem unteren Seitenwandbereich 5. Die äußere Kontur des Schulterbereiches 2 und die äußere Kontur des oberen Seitenwandbereiches 4 sind krümmungsstetig konvex (nach axial außen gekrümmt) ausgebildet -die einzige Ausnahme ist die zwangsweise Ausnehmung 7 im Bereich der Splitlinie 6. Die Seitenwand 3 weist ein Schutzelement 8 gegen Beschädigungen durch Scheuerkontakte auf, welches in die äußere Kontur des oberen Seitenwandbereiches 4 integriert ist. Das Schutzelement 8 ist etwa im Äquator 10 des Reifens angeordnet. Der untere Seitenwandbereich 5 ist durch eine nach axial innen einspringende Stufe 9 gegenüber der Kontur des oberen Seitenwandbereiches 4 nach axial innen versetzt angeordnet und weist eine ebenfalls ausschließlich krümmungsstetig konvex ausgebildete Kontur auf. Das radial innere Ende der Stufe 9, welches den oberen Seitenwandbereich 4 von den unteren Seitenwandbereich 5 trennt ist, befindet sich auf 60% der radialen Höhe (h) der Seitenwand 3, beginnend von der ersten Splitlinie 6, welche Schulterbereich 2 vom oberen Seitenwandbereich 4 trennt. Die Seitenwand des Reifens ist durch die Seitenwandschale einer segmentierten Vulkanisierform geformt und reicht von der ersten Splitlinie 6 bis zur zweiten Splitlinie 15, welche die Seitenwand von dem Wulstbereich des Reifens trennt.

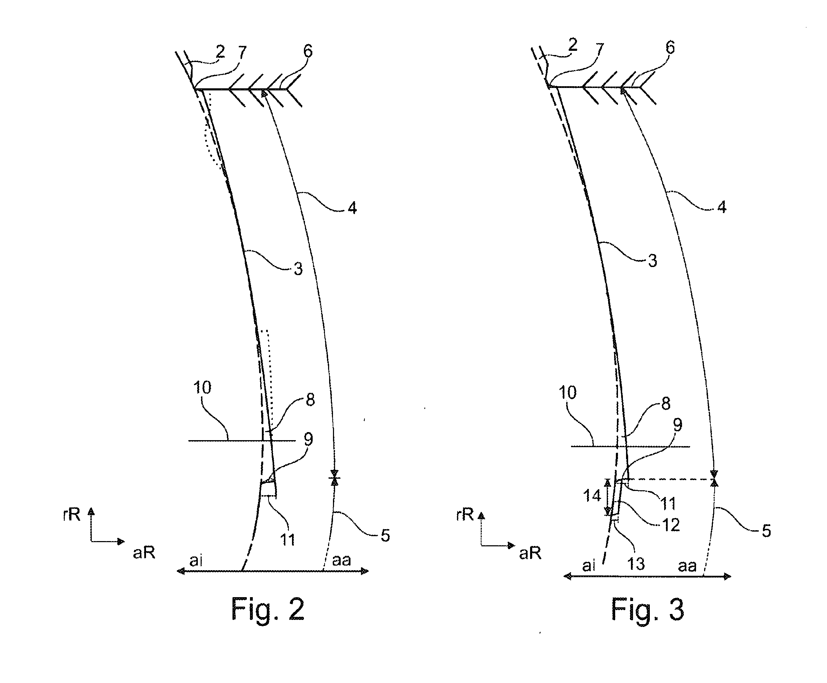

Die **Fig.2** zeigt eine Vergrößerung eines Ausschnitts der äußeren Kontur der Reifenschulter 2 und der äußeren Kontur der Seitenwand 3 der Fig.1. Punktiert ist die äußere Kontur von Reifen des Standes der Technik mit Schutzrippe dargestellt, wobei bei der ersten Splitlinie 6 als auch insbesondere im Bereich der Schutzrippe die äußere Kontur der Schutzrippe des Standes der Technik nach axial außen aus der Schulter - und Seitenwandkontur herausragt.

Die Stufe 9 weist eine axiale Breite 11 von 1mm bis 4mm, hier von 1,5mm, so dass die Kontur des unteren Seitenwandbereiches hier um 1,5mm gegenüber der Kontur des oberen Seitenwandbereiches nach axial innen (ai) versetzt angeordnet ist.

Die **Fig.3** unterscheidet sich von der Fig.2 darin, dass die Stufe 9 treppenartig aus einer weiteren Halbstufe 12 gebildet ist, wobei die Halbstufe 12 axial innen an die Stufe 9 und an den unteren Seitenwandbereich 5 angrenzend angeordnet ist. Die axiale Breite 13 der Halbstufe 12 entspricht in etwa der halben axialen Breite 11 der Stufe 9. Die radiale Höhe der Halbstufe 14 beträgt 3mm bis 10mm, hier 5mm, was etwa 5,5% der radialen Höhe (h) der Seitenwand.

In den Figuren ist in gestrichelter Linie die neutrale Seitenwandkontur des Reifens ohne zusätzliches Seitenwandgummimaterial dargestellt.

### Bezugszeichenliste

- 1: Laufstreifen
- 2: Reifenschulter
- 3: Seitenwand
- 4: oberer Seitenwandbereich
- 5: unterer Seitenwandbereich
- 6: erste Splitlinie
- 7: Ausnehmung
- 8: Schutzelement
- 9: Stufe
- 10: Äquator
- 11: axiale Breite der Stufe
- 12: Halbstufe
- 13: axiale Breite der Halbstufe
- 14: radiale Höhe der Halbstufe
- 15: zweite Splitlinie
- aR: axiale Richtung
- rR: radiale Richtung
- ai: axial innen
- aa: axial außen

## Patentansprüche

1. Fahrzeugluftreifen, insbesondere Van-Reifen, mit einem Laufstreifen (1), Schulterbereichen (2) und Seitenwänden (3), wobei - im Reifenquerschnitt betrachtet - eine der Seitenwände (3) im Bereich des Äquators (10) des Fahrzeugluftreifens ein die Seitenwand (3) gegen Scheuerkontakte schützendes, über die Seitenwand umlaufendes Schutzelement (8) aufweist, wobei -im Reifenquerschnitt betrachtet - die Seitenwand (3) aus einem oberen Seitenwandbereich (4) und einem unteren Seitenwandbereich (5) besteht, wobei die äußere Kontur des Schulterbereiches (2) und des oberen Seitenwandbereiches (4) ausschließlich krümmungsstetig konvex ausgebildet ist, wobei das Schutzelement (8) in die Kontur des oberen Seitenwandbereiches integriert ist und wobei der untere Seitenwandbereich (5) durch eine nach axial innen einspringende Stufe (9) gegenüber der Kontur des oberen Seitenwandbereiches (4) nach axial innen versetzt angeordnet ist und eine ebenfalls ausschließlich krümmungsstetig konvex ausgebildete Kontur aufweist, **dadurch gekennzeichnet, dass** die Stufe (9) treppenartig aus wenigstens einer weiteren Halbstufe (12) gebildet ist, wobei die Halbstufe (12) radial innen an die Stufe (9) und an den unteren Seitenwandbereich (5) angrenzend angeordnet ist und eine geringere axiale Breite (11) als die Stufe (9) aufweist.

2. Fahrzeugluftreifen nach Anspruch 1,
**dadurch gekennzeichnet, dass** die Stufe (9) eine axiale Breite (11) von 1mm bis 4mm, vorzugsweise von 1,5mm aufweist.

3. Fahrzeugluftreifen nach Anspruch 1 oder 2,
**dadurch gekennzeichnet, dass** der Fahrzeugluftreifen mit einer segmentierten Vulkanisierform heizgepresst ist, so dass der Laufstreifen (1) und der Schulterbereich (2) durch radial verfahrbare Formsegmente und jede Seitenwand (3) durch eine an die radial verfahrbaren Formsegmente angrenzende Seitenwandschale geformt ist, so dass der vulkanisierte Fahrzeugluftreifen im Bereich der Grenzfläche von radial verfahrbaren Formsegmenten zur Seitenwandschale eine Splitlinie (6) aufweist und dass der obere Seitenwandbereich (4) zwischen 50% und 70%, vorzugsweise etwa 60% und der untere Seitenwandbereich (5) zwischen 50% und 30%, vorzugsweise etwa 40% der mit der Seitenwandschale geformten Seitenwand (3) einnimmt.

4. Fahrzeugluftreifen nach einem der Ansprüche 1 bis 3, **dadurch gekennzeichnet, dass** die Halbstufe (12) über den Umfang des Reifens Durchbrechungen aufweist, wobei vorzugsweise drei Halbstufen (12) und drei Durchbrechungen, welche regelmäßig einander abwechseln, angeordnet sind.

5. Fahrzeugluftreifen nach einem oder mehreren der vorangehenden Ansprüche, **dadurch gekennzeichnet, dass** der Fahrzeugluftreifen auf seiner Seitenwand (3) nur vertiefte, in die Seitenwand (3) eingebrachte Kennzeichnungen aufweist.

## Claims

1. Pneumatic tyre for a vehicle, in particular van tyre, with a running strip (1), shoulder regions (2) and side walls (3), one of the side walls (3) having, as seen in the tyre cross section, in the region of the equator (10) of the pneumatic vehicle tyre a protective element (8) which protects the side wall (3) against chafing contacts and which extends peripherally over the side wall, the side wall (3) consisting, as seen in the tyre cross section, of an upper side-wall region (4) and of a lower side-wall region (5), the outer contour of the shoulder region (2) and of the upper side-wall region (4) being designed to be exclusively convex with continuous curvature, the protective element (8) being integrated into the contour of the upper side-wall region, and the lower side-wall region (5) being arranged so as to be offset axially inwards, with respect to the contour of the upper side-wall region (4), by means of an axially inwardly set-back step (9) and having a contour likewise designed to be exclusively convex with continuous curvature, **characterized in that** the step (9) is formed in a stair-like manner from at least one further half-step (12), the half-step (12) being arranged so as to be contiguous to the step (9) and to the lower side-wall region (5) radially on the inside and having a smaller axial width (11) than the step (9).

2. Pneumatic tyre for a vehicle according to Claim 1, **characterized in that** the step (9) has an axial width (11) of 1 mm to 4 mm, preferably of 1.5 mm.

3. Pneumatic tyre for a vehicle according to Claim 1 or 2, **characterized in that** the pneumatic vehicle tyre is hot-pressed by means of a segmented vulcanizing mould, so that the running strip (1) and the shoulder region (2) are formed by radially movable mould segments and each side wall (3) is formed by a side-wall shell contiguous to the radially movable mould segments, so that the vulcanized pneumatic vehicle tyre has a split line (6) in the region of the interface of radially movable mould segments to the side-wall shell, and **in that** the upper side-wall region (4) occupies between 50% and 70%, preferably about 60%, and the lower side-wall region (5) between 50% and 30%, preferably about 40%, of the side wall (3) formed by the side-wall shell.

4. Pneumatic tyre for a vehicle according to one of Claims 1 to 3, **characterized in that** the half-step (12) has perforations over the circumference of the tyre, preferably three half-steps (12) and three perforations, which also alternate regularly with one another, being arranged.

5. Pneumatic tyre for a vehicle according to one or more of the preceding claims, **characterized in that** the pneumatic vehicle tyre has on its side wall (3) only recessed markings introduced into the side wall (3).

## Revendications

1. Pneu de véhicule, en particulier pneu de camionnette, comprenant une bande de roulement (1), des régions d'épaulement (2) et des parois latérales (3), l'une des parois latérales (3) présentant, vu en section transversale du pneu - dans la région de l'équateur (10) du pneu du véhicule, un élément de protection (8) tout autour de la paroi latérale, protégeant la paroi latérale (3) contre les contacts de frottement, la paroi latérale (3) - vue en section transversale du pneu - se composant d'une région de paroi latérale supérieure (4) et d'une région de paroi latérale inférieure (5), le contour extérieur de la région d'épaulement (2) et de la région de paroi latérale supérieure (4) étant réalisé sous forme convexe exclusivement avec une courbure constante, l'élément de protection (8) étant intégré au contour de la région de paroi latérale supérieure et la région de paroi latérale inférieure (5) étant disposée de manière décalée axialement vers l'intérieur par un étage (9) saillant axialement vers l'intérieur par rapport au contour de la région de paroi latérale supérieure (4), et présentant un contour également réalisé sous forme convexe exclusivement avec une courbure constante, **caractérisé en ce que** l'étage (9) est formé en forme de gradin à partir d'au moins un demi-étage supplémentaire (12), le demi-étage (12) étant disposé radialement à l'intérieur de manière adjacente à l'étage (9) et à la région de paroi latérale inférieure (5), et présentant une largeur axiale plus petite (11) que l'étage (9).

2. Pneu de véhicule selon la revendication 1, **caractérisé en ce que** l'étage (9) présente une largeur axiale (11) de 1 mm à 4 mm, de préférence de 1,5 mm.

3. Pneu de véhicule selon la revendication 1 ou 2, **caractérisé en ce que** le pneu de véhicule est pressé à chaud avec une forme vulcanisée segmentée, de telle sorte que la bande de roulement (1) et la région d'épaulement (2) soient formées par des segments moulés déplaçables radialement et que chaque paroi latérale (3) soit formée par une coque de paroi latérale adjacente aux segments moulés déplaçables radialement, de telle sorte que le pneu de véhicule vulcanisé présente, dans la région de la surface limite de segments moulés déplaçables radialement à la coque de paroi latérale une ligne de séparation (6) et que la région de paroi latérale supérieure (4) constitue entre 50 % et 70 %, de préférence environ 60 % de la paroi latérale (3) formée avec la coque de paroi latérale, et que la région de paroi latérale inférieure (5) constitue entre 50 % et 30 %, de préférence environ 40 %, de la paroi latérale (3) formée avec la coque de paroi latérale.

4. Pneu de véhicule selon l'une quelconque des revendications 1 à 3, **caractérisé en ce que** le demi-étage (12) présente sur la périphérique du pneu des interruptions, trois demi-étages (12) et trois interruptions étant de préférence prévus, lesquels sont disposés en alternance régulière.

5. Pneu de véhicule selon l'une quelconque ou plusieurs des revendications précédentes, **caractérisé en ce que** le pneu de véhicule présente sur sa paroi latérale (3) seulement des marquages renfoncés, pratiqués dans la paroi latérale (3).
